# EUROPEAN PATENT SPECIFICATION

(11) **EP 3 628 553 B1**
(45) Date of publication and mention of the grant of the patent: **08.09.2021**
(21) Application number: 19192805.0
(22) Date of filing: 21.08.2019
(51) Int. Cl.: B60S 9/02, B60S 9/08, E02F 9/08, B66C 23/78, F16M 11/00, F16M 13/00, A47C 4/00

(54) **SUPPORT FOOT**
STÜTZFUSS
PIED DE SUPPORT

(30) Priority: 27.09.2018 IT 201800008957
(43) Date of publication of application: 01.04.2020
(73) Proprietor: Simol S.P.A., 42045 Luzzara (Reggio Emilia) (IT)
(72) Inventor: LEONARDI, Andrea, 46029 SUZZARA (MN) (IT); RIGHETTI, Valter, 46027 San Benedetto Po (MN) (IT)
(74) Representative: Corradini, Corrado

(56) References cited:
- WO-A1-2010/099995
- WO-A1-2011/146590
- CN-A- 105 476 350
- CN-Y- 2 204 535
- CN-Y- 2 846 975
- US-A1- 2001 050 476

## Description

### TECHNICAL FIELD

The present invention relates to a support foot for structures and/or machinery, such as lorry trailers, agricultural machinery or industrial vehicles, in order to enable stable support on the ground. In particular, the invention relates to an extendable support foot provided with a foldable base.

### PRIOR ART

Extendable support feet are generally used for lifting and/or levelling structures or machinery such as lorry trailers, agricultural machinery or industrial vehicles, in order to enable stable support thereof on the ground.

Such support feet usually comprise a first tube, or extension, with which a second outer tube concentric to the first is slidably associated. The first tube rests on the ground through a base or a wheel, while the second tube is usually fixed to the object to be supported. Inside the two tubes a mechanism is installed that allows the size of the support foot to be adjusted. This mechanism is generally comprised of a screw associated with the second body which meshes with a female screw associated with the first body or, alternatively, by a linear actuator such as a piston. Additionally, the support feet may comprise one or more additional extensions, in the event that the structure or machine to be supported has a particularly raised height from the support surface, e.g. the ground.

The support feet provided with a base may be sized to support substantial loads - e.g. trailers for tankers and containers - and/or substantial variations in weight force - e.g. when one or more support feet are used to stabilize work equipment - e.g. excavators - during the operation thereof. The base must have a surface area that is related to the weight of the object to be supported; in particular, the area of the base must be sized so as to define a sufficiently large plane of distribution of the weight as to prevent the underlying surface subsiding (e.g. soil or road surface) to support its load properly. However, the necessary base area for supporting high loads is so large that it makes the support foot bulky. In detail, the radial dimensions of the support foot are excessive both during the positioning of the support foot and during the movement of the load, in particular, in the case of moving machinery.

Document CN2846975 discloses a support foot having a support base comprising a plurality of sectors rotatably associated with a first body of the foot and movable between an unfolded position and a folded position.

An object of the present invention is to overcome the above-mentioned drawbacks of the prior art, with a simple and rational solution and at a reduced cost.

Such purposes are accomplished by the characteristics of the invention given in the independent claim. The dependent claims outline preferred and/or particularly advantageous aspects of the invention.

### DISCLOSURE OF THE INVENTION

The invention particularly discloses a support foot according to claim 1.

In this way, the support foot can pass from a compact configuration, in which the sectors are in the folded position, to a support configuration, in which the sectors are in the unfolded position, through a simple and easily automatable mechanism.

In one embodiment, the activation element is movably associated relative to the first body along the first longitudinal axis of the first body between a first axial position and a second axial position distinct from the first axial position. Moreover, thanks to such solution the sectors tend to pass from the folded position to the unfolded position or from the unfolded position to the folded position in an automatic way.

In this way the activation element can be implemented simply and effectively. Advantageously, the rotation of the sectors may be associated with an extension/retraction movement of the support foot.

In one embodiment, each sector comprises an arm that juts out in a substantially opposing direction to the support face relative to the respective axis of rotation. Advantageously, the arm is adapted to come into contact with the activation element for the activation in rotation of the respective sector about the respective axis of rotation between the unfolded position and the folded position.

Thanks to such solution the sector can be rotated between the folded position and the unfolded position through a simple mechanical interaction, in particular the arm with the respective sector defining an advantageous first order lever about its own axis of rotation.

In one embodiment, the support foot comprises a second body, which is tubular, provided with a second longitudinal axis. The second body, which is tubular, is slidably associated with the outside of the first body along a longitudinal direction parallel to the first longitudinal axis and to the second longitudinal axis. Advantageously, the first body and the second body are mutually movable between a retracted position and an extended position (in a telescopic way). Preferably, the base is associated with the end of the first body projecting axially from the second body.

In this way, the support foot can be extended along the longitudinal direction according to requirements.

In one embodiment, the activation element is rigidly connected to the second body and movable therewith along the longitudinal direction, the activation element in the stroke of the second body relative to the first body from the extracted position to the retracted position, being configured to press on the arm of each sector for activating in rotation each sector from the unfolded position to the folded position in contrast to the spring.

Thanks to such solution, the rotation of the sectors from the folded position to the unfolded position allows the support base to be formed in a single movement with the extension of the support foot. Likewise, the rotation of the sectors from the unfolded position to the folded position allows a compact configuration of the base to be obtained at the same time as the contraction of the support foot simply and quickly.

In one embodiment, the support foot comprises a box provided with a third longitudinal axis and slidably associated inside the first body along a longitudinal direction parallel to the first longitudinal axis. The first body and the box are mutually movable between a retracted position and an extended position. Advantageously, the base is associated with an end of the first body that surrounds at least an axial portion of the box.

In this way, the support foot comprises a further movable portion during the use arrangement thereof. Such movable portion allows the rotation of the sectors to be implemented through an alternative structure to that shown above.

In one embodiment, the activation element is placed on the box and movable therewith along the longitudinal direction. Advantageously, the activation element is configured to house at least one portion of the arm of each sector to activate each sector in rotation, alternatively, between the unfolded position and the folded position, respectively during the stroke of the box relative to the first body between the retracted position and the extracted position.

Thanks to such solution, the activation element interacts with the arm of each sector imposing the rotation from the folded position to the unfolded position and vice versa through a simple and stable structure.

### BRIEF DESCRIPTION OF THE DRAWINGS

Further characteristics and advantages of the invention will become clear from reading the following description provided as a non-limiting example, with the help of the figures illustrated in the attached drawings.
Figure 1 is an axonometric view of a support foot according to a first embodiment of the present invention, wherein sectors of the support base are in the folded position.
Figure 2 is a lateral view of the support foot of Figure 1.
Figure 3 is a sectional view relative to an axis III-III of the support foot of Figures 1 and 2.
Figures 4A - 4C are sectional views of a detail of the support foot of Figure 1 in different operating configurations.
Figure 5 is an axonometric view of the support foot of Figure 1 with the sectors in the unfolded position forming a support base.
Figure 6 is an axonometric view of a support foot according to a second embodiment of the present invention, wherein sectors of the support base are in the folded position.
Figure 7 is a lateral view of the support foot of Figure 6.
Figure 8 is a sectional view relative to an axis VIII-VIII of the support foot of Figures 6 and 7.
Figures 9A - 9C are sectional views of a detail of the support foot of Figure 6 in different operating configurations.
Figure 10 is an axonometric view of the support foot of Figure 6 with the sectors in the unfolded position forming a support base.

### BEST WAY TO CARRY OUT THE INVENTION

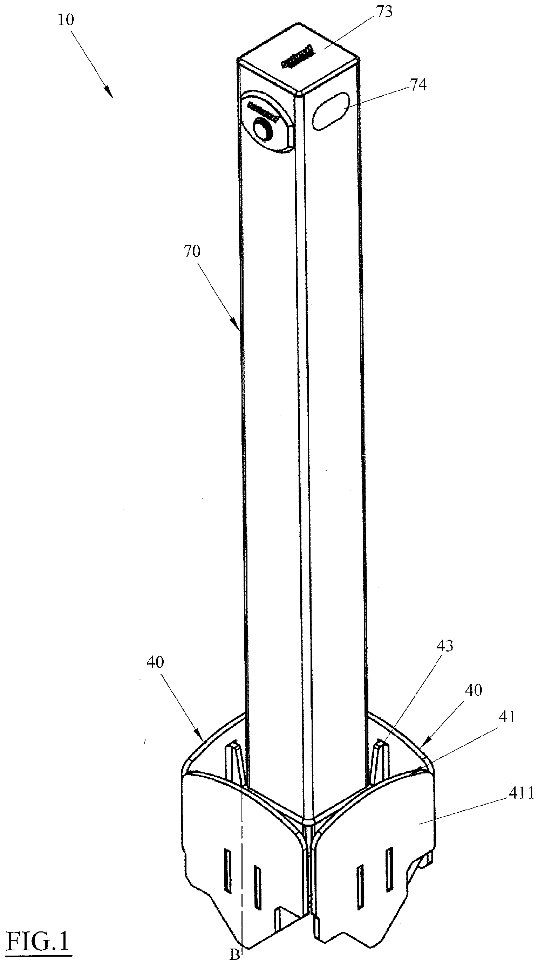

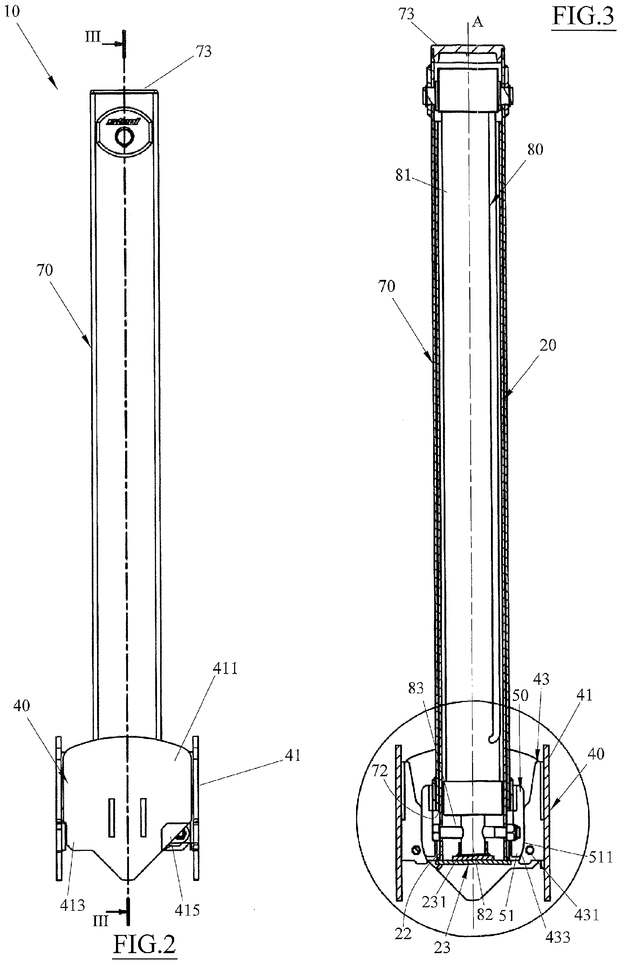

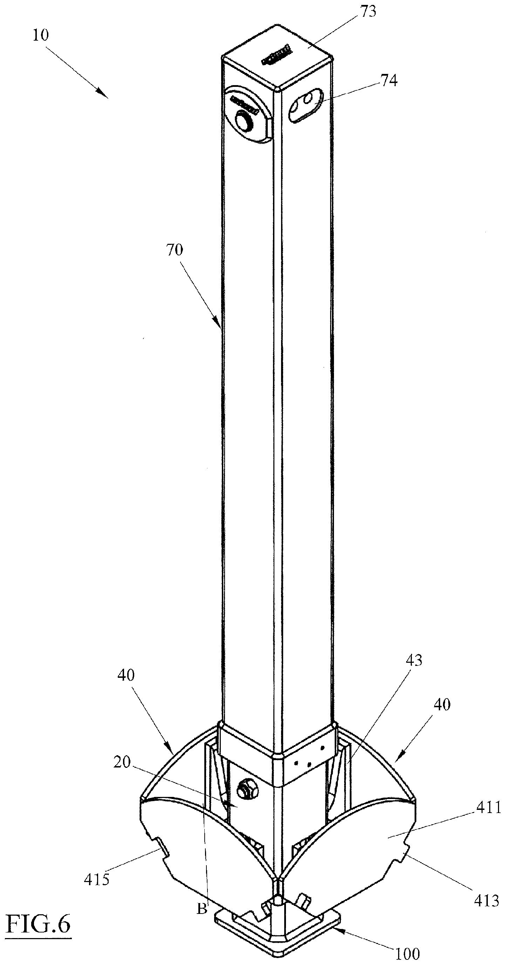

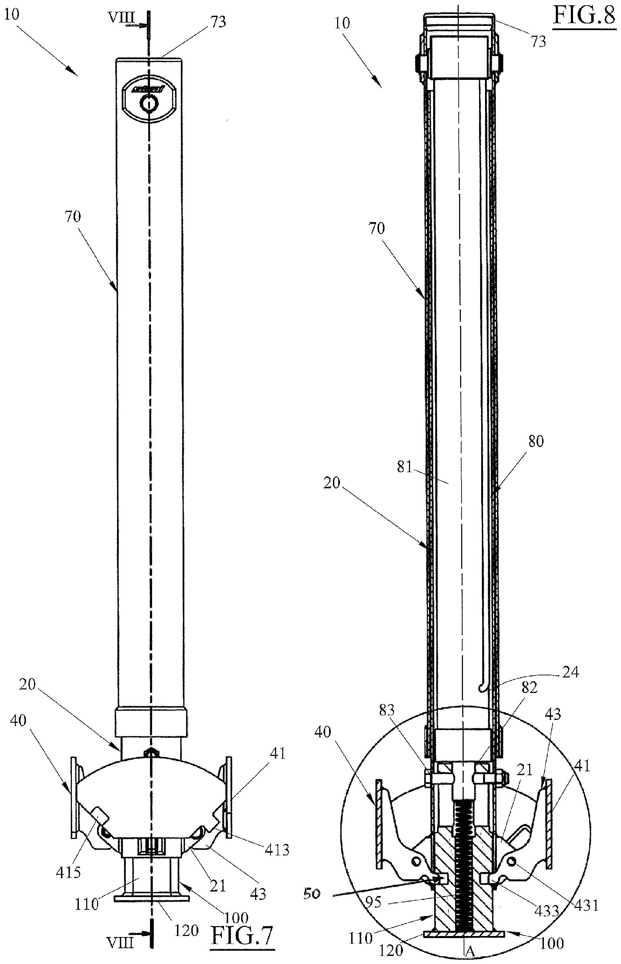

With particular reference to the Figures, 10 is used overall to indicate a support foot for supporting and/or levelling structures, vehicles and machinery according to two embodiments of the present invention. In particular, Figures 1-5 refer to a first embodiment, and Figures 6-10 refer to a second embodiment.

In general, the support foot 10 comprises a first body 20, or extension, elongated in a longitudinal direction, identified by a corresponding longitudinal axis A of the first body 20, wherein the first body 20 is for example tube-shaped (hollow), preferably with a polygonal section (square in the examples illustrated). Preferably, the first body 20 comprises at least one tab 21, even more preferably a pair of tabs 21 for each lateral face, as shown in the examples of the figures. Each tab 21 juts out transversally from an outer surface of the first body 20 at a free end 22 thereof. Each tab 21 comprises a through hole 211 formed at a free end thereof, i.e. distal from the first body 20. In the example considered, the tabs 21 formed on a same face of the first body 20 have respective coaxial through holes 211, e.g. along a same axis, substantially transversal, preferably orthogonal, to the longitudinal axis A of the first body 20.

The support foot 10 further comprises a support base 30 associated with the first body 20, e.g. in proximity to an axial end thereof, intended to be (in use) the lower end of the first body 20 (i.e. of the support foot 10 itself, when the first body 20 is in the erect position, i.e. with the longitudinal axis A substantially vertical).

In more detail, the base 30 comprises two or more sectors 40 - four in the examples considered (i.e. one for each side of the first body 20).

Each sector 40 comprises a flat plate 41 with a (main) support face 411, adapted to come into contact on a parking surface S substantially orthogonal to the longitudinal axis A, and an opposite (main) exposed face, which are separated by a reduced distance. Advantageously, each plate 41 is shaped so as to have edge portions, in the unfolded position, adapted to be flush, preferably in contact, with corresponding edge portions of the plates 41 of adjacent sectors 40 so as to form the support base 30.

The sector 40 also comprises at least one lever element or arm 43 jutting out in a substantially opposing direction to the support face 411 from the exposed face of the plate 41. In turn, each arm 43 comprises a through hole 431. For example, the arms 43 have two substantially triangular main faces transversal to the main faces of the plate 41. The through hole 431 of each arm 43 is formed at a free vertex - i.e. distal from the plate 41 - of the respective arm 43.

Each sector 40 is rotatably associated with the first body 20, relative to a respective axis of rotation C orthogonal to the longitudinal axis A of the first body 20. Advantageously, the through hole 431 of each arm 43 is arranged coaxially to the through hole 211 of at least one corresponding tab 21 formed on the first body 20. A pivot element 60 is inserted in the through holes 431 and 211, with a longitudinal axis of the pivot 60 defining the axis of rotation C.

Optionally, each plate 41 comprises a projecting element, or tooth 413, jutting out from a perimeter edge of the plate 41. The tooth 413 is conformed to engage a plate 41 adjacent to the plate from which it juts out. Additionally, each plate 41 may also comprise a housing 415 which is conformed to receive the tooth 413 of an adjacent sector. In the example of the figures, the housing 415 of each sector 40 is formed so as to be sunken relative to the support face 411 of the plate 41.

Preferably, the support foot 10 also comprises a second body 70 or extension, elongated in a longitudinal direction, corresponding to the longitudinal axis A of the first body 20 in the embodiments considered. For example, the second body 70 is tube-shaped (hollow), preferably with a polygonal section (square in the example). In particular, the second body 70 is coaxial to the first body 20 and slidably associated relative thereto along the direction identified by the longitudinal axis A.

The second body 70 comprises a cavity 71 configured to contain at least one portion of the first body 20, that can be inserted into the cavity 71 through an opening 72. In the embodiments illustrated in the figures, the cavity 71 has a square shaped cross section that delimits an area such as to guarantee reduced play between the outer surface of the first body 20 and the inner surface of the cavity 71. In this way it is possible to make the sliding of the first body 20 stable in the cavity 71 of the second body 70 and minimize the entry of foreign bodies in the cavity 71.

Preferably, the second body 70 also comprises a cover 73 provided at a second end opposite the free end comprising the opening 72. Finally, the second body 70 may also comprise a through hole 74 formed in proximity to the cover 73. Advantageously, the support foot 10 is further provided with a means 80 for adjusting the distance between the second body 70 and the base 30. In the example considered, the adjustment means 80 comprises a linear actuator - pneumatic or hydraulic or oil dynamic. In detail, the adjustment means 80 comprises a cylinder 81 associated with the second body 70 and a stem 82 associated with the first body 20 and slidable along the longitudinal axis A.

In the embodiments considered, the stem 82 is associated with the first body 20 by means of a rigid constraining element, e.g. a bolt 83, and adapted to be inserted into pairs of coaxial through holes in the first body 20 and in the stem 82.

During use, the support foot 10 is associated - e.g. through welding and/or through the interposition of at least one intermediate junction element such as a connection bracket (not shown in the drawings) - to a structure or a machine (not illustrated), e.g. through a (lateral) face of the second body 70.

The through hole 74 in the second body allows the coupling of transmission elements (not illustrated) with the adjustment means 80 for transferring the driving force thereto - e.g. hydraulic pressure, electrical energy and/or a mechanical force.

The first body 20 and the second body 70 are mutually movable between a first position, in which the distance between the second body 70 and the free end of the first body 20 is minimum, and a second position, in which the distance between the second body 70 and the free end of the first body 20 is maximum. In the examples considered, the actuation of the adjustment means 80 allows an entity of the mutual movement between the first body 20 and the second body 70 to be determined. Furthermore, in the embodiments of the present invention, each sector 40 can be rotated between an unfolded position and a folded position.

In the unfolded position, the sectors 40 are arranged to form the support base 30 so as to define a uniform surface. For example, in the unfolded position, the support face 411 of each sector 40 lies on a plane P of distribution of the weight of the base 30, i.e. substantially orthogonal to the longitudinal axis A, forming a uniform support surface of the support base 30 able to support the structure or the machine with which the support foot 10 is associated, discharging at least part of the weight of such structure or machine on the parking surface S - with the plane P of distribution of the weight of the base 30 substantially parallel to the parking surface S and overlapping with at least part of it.

On the contrary, in the folded position, each sector 40 is reclined on a portion of the first body 20 with its support face 411 inclined relative to the plane P - and to the parking surface S - for example, each support face 411 lies on a substantially parallel plane to the longitudinal axis A, forming a free end of the support foot 10 with reduced dimensions along transversal directions to the longitudinal axis A relative to the dimensions in the unfolded position.

In the embodiments of the present invention, the support foot 10 also comprises an activation element 50 adapted to interact with the sectors 40 for activating them in rotation about the respective axis of rotation C between the unfolded position and the folded position, as described in more detail below. Preferably, the activation element 50 is slidably movable associated with the first body 20 along the first longitudinal axis A of the first body 20 between a first axial position and a second axial position - distinct from the first axial position. In particular, the activation element 50 is configured to come into contact with each arm 43 for rotating the respective sector 40, about the corresponding axis of rotation C, between the unfolded position and the folded position and vice versa.

With particular reference to Figures 1 - 5, in the first embodiment the activation element 50 is provided associated with the second body 70. In particular, the activation element 50 is rigidly connected to the second body 70 and movable therewith along the longitudinal direction A.

In the example considered, the activation element 50 comprises a plurality of projecting elements 51, in particular, two projecting elements 51 for each sector 40 - therefore two projecting elements 51 for each face of the second body 70. The projecting elements 51 are associated with the second body 70 at the opening 72 thereof - i.e. at a free end of the second body 70 and project axially beyond it. For example, the activation element 50 may comprise a support portion adapted for the second body 70 to be inserted therein and connected thereto. Alternatively, the projecting elements 51 of the movement element 50 may be formed as a single piece with the second body 70.

The projecting elements 51 jut out transversally from the outer surface of the second body 70 so as to project axially beyond the opening 72 for a predetermined length substantially parallel to the longitudinal axis A. Additionally, each projecting element 51 comprises an end shaped edge (distal from the second body 70) so as to define a pusher 511 that acts substantially like a tappet, (i.e. they exert an axial thrust) on a corresponding free edge 433 of an arm 43 of a respective sector 40, as will be described better below.

In the example of Figures 1 - 5, each sector 40 comprises a pair of arms 43 formed symmetrically relative to a longitudinal axis B of the plate 41 that belongs to a median plane orthogonal to the axis of rotation C. Advantageously, the through holes 431 of the arms 43 of a same sector 40 are formed coaxial to each other and the pivot 60 is inserted into both of them. As mentioned above, a free edge 433 - i.e. distal from the plate 41 - of each arm 43 is shaped with a profile adapted to correspond to the profile of a respective projecting element 51 of the activation element 50, i.e. to the pusher 511. For example, the free edge 433 has a profile substantially shaped like a cam (i.e. conformed to switch an axial thrust into a rotation movement of the respective arm 43, i.e. of the respective sector 40), adapted to interact with the pusher 511 of the projecting element 51 as described below.

Furthermore, the support foot 10 preferably comprises a respective spring 90, preferably of the torsion type, associated with each sector 40. For example, each spring 90 comprises opposite end portions associated with the sector 40 and with the first body 20, respectively, and one or more coils through which the pivot 60 is inserted. In this way, the torsion spring 90 is kept in the operating position by exploiting the same pivot 60 that rotatably associates the corresponding sector 40 with the first body 20.

Finally, the first body 20 also comprises a base 23 coupled to the free end 22 thereof.

The base 23 prevents access to an internal cavity 24 of the first body 20 and defines a continuous support surface for the first body 20. Advantageously, the base 23 comprises a reception element 231, for example cup-shaped, adapted to face the cavity 24 of the first body 20 when the base 23 is associated with it and to receive a free end of the stem 82 of the adjustment means 80.

During use, the support foot 10 can change configuration between a compact configuration, e.g. assumed during the movement of the structure or machine with which the support foot 10 is associated, and a support configuration, adapted to support the structure or machine during parking. In particular, in the stroke of the second body 70 relative to the first body 20 from the extracted position to the retracted position, the activation element 50 is configured to press on the arm 43 of each sector 40 to activate in rotation each sector 40 from the unfolded position to the folded position. In the first embodiment, each sector 40 is movable from the respective unfolded position to the respective folded position in contrast to the spring 90. In other words, the spring 90 is associated with each sector 40 so as to impart an elastic force adapted to keep each sector 40 in the unfolded position.

In the compact configuration (Figures 1 - 3 and 4A) the first body 20 is almost completely housed in the second body 70 so that the support foot 10 has a minimum longitudinal extension. Only the end portion of the first body 20 from which the tabs 21 and the base 23 (if provided) jut out, project from the second body 70, beyond the opening 72. The sectors 40 are all in the folded position with the longitudinal axes B of the plates 41 inclined - preferably parallel - to the longitudinal axis A. Furthermore, the plates 41 of adjacent sectors 40 are substantially squared to each other. In the compact configuration the sectors 40 of the base 30 define a lateral dimension (i.e. in a normal direction to the longitudinal axis A) of the support foot 10 corresponding to the transversal width of a plate 41 plus double the thickness of the adjacent plates 41 - and substantially squared with the first plate 41 when folded.

In the compact configuration, each projecting element 51 of the activation element 50 on the second body 70 engages a corresponding arm 43 of a sector 40. In the example considered, pairs of projecting elements 51 engage a respective pair of arms 43 of a sector 40. In detail, the profile of the pusher 511 of each projecting element 51 corresponds to the profile of the free edge 433 of the corresponding arm 43. The engagement between the pair of projecting elements 51 and arms 43 keeps the corresponding sector 40 locked in the folded position.

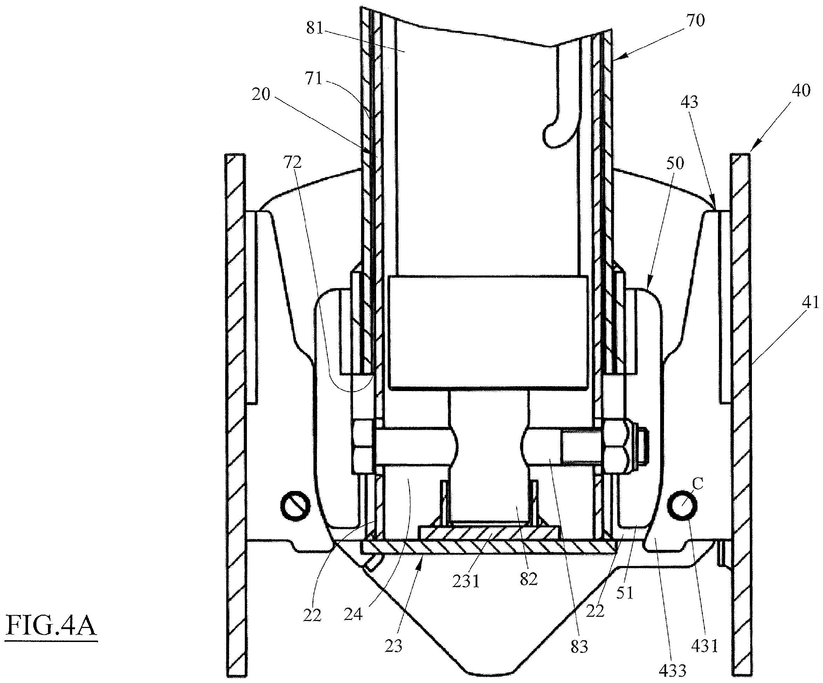

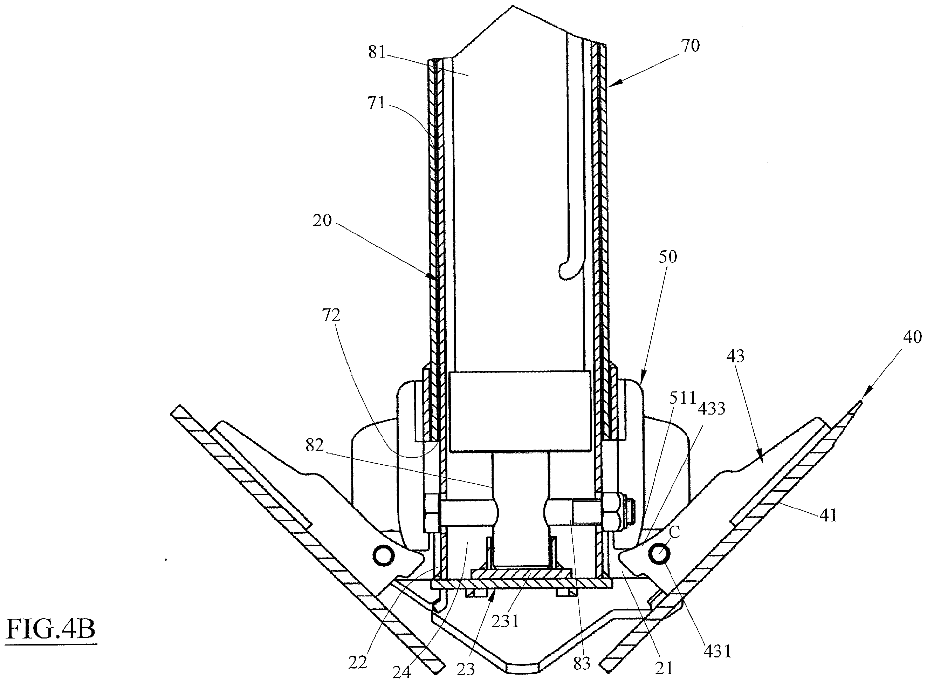

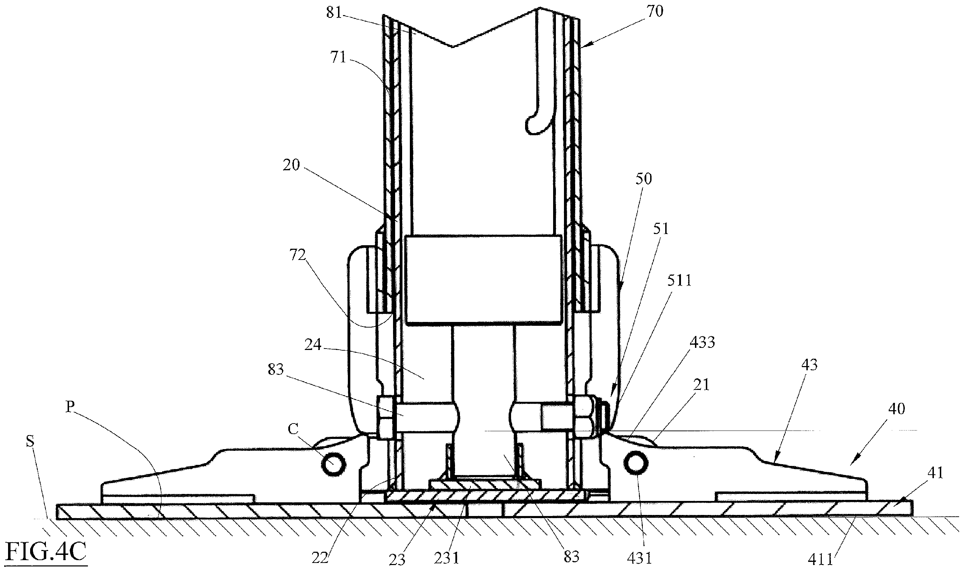

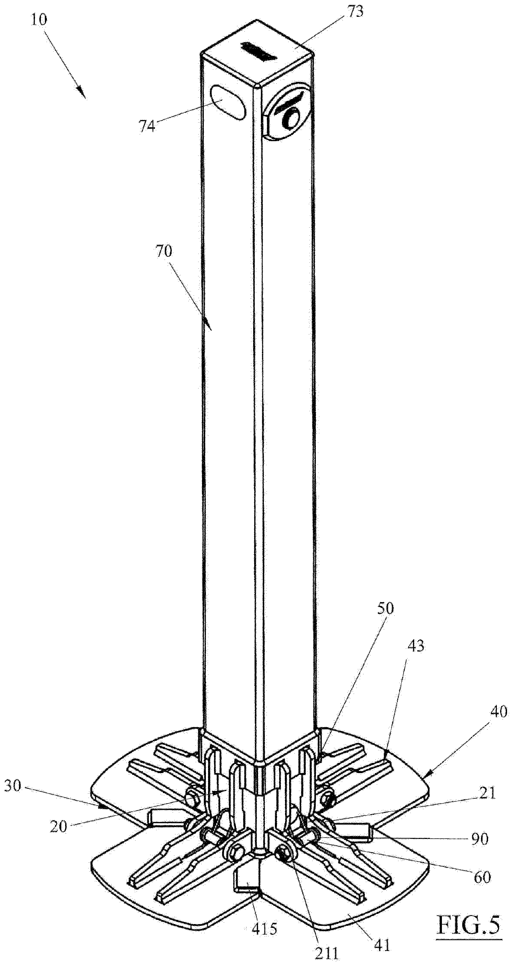

When the adjustment means 80 is actuated for switching the support foot 10 from the compact configuration to the support configuration, the second body 70 slides relative to the first body 20, with the opening 72 and the activation element 50 being distanced longitudinally from the free end of the first body 20. This distancing causes the disengagement between the projecting elements 51 and the respective arms 43 of the sectors 40 (Figure 4B). In detail, the pusher 511 of each projecting element 51 slides longitudinally away from the free edge 433 of the respective arm 43 disengaging it. Therefore, the arms 43 of each sector 40 are free to rotate about the pivot 60 due to the effect of the weight force and the spring 90 (if provided) therefore taking the corresponding sector 40 from the folded position to the unfolded position. When the pusher 511 completely disengages the respective free edge 433, the sectors 40 reach the unfolded position (illustrated in Figures 4C and 5). In detail, each sector 40 reaches the unfolded position with the respective plate 41 that is coplanar to the plates 41 of the other sectors 40, forming the base 30 provided with a uniform support surface. The base 30 - and, therefore, each sector 40 - is arranged horizontally, i.e. parallel to the plane P - to the parking surface S - and transversal to the longitudinal axis A. Therefore, the base 30 has a total area that substantially corresponds to the sum of the areas of the support faces 411 of the sectors 40. In this way, it is possible to obtain a base 30 having, when in the unfolded position, a surface area on the plane P of distribution of the weight - i.e. supporting the parking surface S - as wide as necessary and, when not in use, a limited dimension, e.g. during the movement of the structure or machine to which the support foot 10 is constrained.

Advantageously, the teeth 413 of the sectors 40 are overlapped with the corresponding housings 415 of the adjacent sectors in the unfolded position. Preferably each tooth 413 goes into abutment on the respective housing 415. In this way it is possible to effectively constrain the sectors 40 to each other, thus obtaining a particularly stable base 30 although it comprises various sectors 40.

In the considered embodiment, a terminal portion of the plates 41 is in contact with the end of the first body 20, in particular of the cover 23 - if provided - when the sectors 40 are in the unfolded position (as can be appreciated more clearly in Figure 4C), so that such terminal portion is axially interposed (or however compressed in use) between the end of the first body 20 (cover 23) and the support ground. In this way, the weight force acting on the support foot 10 is transmitted directly to the base 30. At the same time, this weight force acting on the plates 41 keeps the sectors 40 stable in the unfolded position, preventing a rotation towards the folded position. When the adjustment means 80 are activated to bring the support foot 10 into the compact configuration, each projecting element 51 of the activation element 50 is moved towards the corresponding arm 43 of the sectors 40 by the retraction movement of the stem 82. During such movement, the pusher 511 progressively engages the free edge 433 forcing a rotation of the corresponding arm 43 about the pivot 60 thus rotating the entire sector 40 from the unfolded position to the folded position.

With reference now to Figure 6 - 10, the second embodiment of the support foot 10 is described below. In particular, the support foot 10 differs from the support foot of the first embodiment as follows, where elements corresponding to elements already discussed are indicated by the same reference numbers and whose description is not repeated for the sake of brevity.

In this case, the support foot 10 comprises a base element or box 100 slidably associated with the first body 20 (inside it). The box 100 comprises a longitudinally elongated hollow body 110 and, possibly, an enlarged base portion 120 with an area greater than or equal to the cross section of the first body 20. In particular, a cross section of the body 110 is such as to allow (on the side of the free end 21, without a cover 23) it to be inserted into the cavity 24 of the first body 20 - preferably with reduced play. Advantageously, the body 110 of the box 100 is coaxially associated with the first body 20 and with the second body 70 along the longitudinal axis A. In this structure the free end 21 of the first body 20 surrounds at least one axial portion of the box 100.

The body 110 of the box 100 has a prismatic shape and has a polygonal external cross section, e.g. complementary to the internal cross section of the first body 20, so as to define a prismatic connection with the first body 20.

The body 110 of the box 100 comprises an inner surface 112 that defines an elongated cavity, a through opening 113 transversal to the cavity and with a predetermined longitudinal extension. In the example, the inner surface 112 has, in sequence from the base portion 120 towards the through opening 113: a pair of cylindrical stretches with different diameters, in particular a first stretch 114 having a smaller diameter and a second stretch 115 having a larger diameter - in particular, adapted to receive the stem 82 of the adjustment means 80. The second stretch 115 of the inner surface is in communication with the through opening 113.

Furthermore, the body 110 comprises a through hole 116 formed in the opposite end to the end portion, facing the through opening 113 and coaxial to the cavity of the body 110. Preferably, the through hole 116 and the cavity are centred on the longitudinal axis A, when the body 110 is inserted into the cavity 24 of the first body 20 - i.e. the body 110 is coaxial to the first body 20 and to the second body 70.

In the second embodiment, the activation element 50 is placed on the box 100 (and is movable therewith relative to the first body 20). In the example considered, the activation element 50 comprises a plurality of niches 53 formed in the body 110, e.g. such niches 53 act substantially like a tappet or a pusher (i.e. they exert an axial thrust), on a corresponding free edge 433 of an arm 43 of a respective sector 40, as will be described better below. The niches 53 are formed starting from a side surface of the body 110 and extend towards the inside thereof, e.g. squared with them. The box 100 - having a square cross section - comprises a niche 53 at each of its side walls - and, therefore, also at each of the side walls of the first body 20 when the box 100 is inserted in the cavity 24 of the first body 20. Alternatively, a continuous groove (annular, e.g. extending along the whole perimeter) may be formed instead of the niches 53.

Advantageously, each of the niches 53 is accessible from the free edge 433 of a respective arm 43 through respective windows 25 formed in the first body 20. In particular, the first body 20 comprises a plurality of hollows or windows 25 formed at the free end thereof. In the example considered, the first body 20 - with a square cross section - comprises a window 25 at each of the side walls thereof. Preferably, each window 25 is interposed between a corresponding pair of tabs 21.

In particular, each niche 53 is formed so as to be exposed through a corresponding window 25 of the first body when the body 110 is inserted in the cavity thereof.

An elastic element, preferably a spring 95 of the compression type, is inserted in the cavity defined by the side surface of the body 110 of the box 100. The stem 82 of the adjustment means 80 is inserted into the through hole 116 until it comes into contact with an end of the compression spring 95. Furthermore, the bolt 83 is threaded into the through opening 113.

In the second embodiment, each sector 40 comprises a single arm 43, e.g. aligned with the longitudinal axis B of the respective plate 41. As mentioned above, the arm 43 comprises a free edge 433 - i.e. distal from the plate 41 - substantially conformed like a cam (i.e. conformed to switch an axial thrust into a rotation movement of the respective arm 43, i.e. of the respective sector 40). In the embodiment considered, a distance between the through hole 431 and the free edge 433 is less than a distance between the through hole 431 and the plate 41.

Each sector 40 is associated with the activation element 50 through the free edge 433 of the respective arm 43. In particular, the free edge 433 of each arm 43 is adapted to be housed in a respective niche 53 of the activation element 50.

During use, the support foot 10 can change configuration between a compact configuration, assumed during the movement of the machine with which the support foot 10 is associated, and a support configuration, adapted to support the machine on which it is assembled.

In particular, each sector 40 is movable from the respective folded position to the respective unfolded position in contrast to the spring 95 as described in more detail below. In the embodiment considered, the first body 20 and the box 100 are mutually movable between a retracted position and an extended position. Preferably, the activation element 50, or the niches 53 made in the body 110 of the box 100, is configured to activate each sector 40 in rotation, alternatively, between the unfolded position and the folded position, respectively during the stroke of the box 100 relative to the first body 20 between the retracted position and the extracted position.

For example, in the compact configuration (Figures 6 - 8 and 9A) the first body 20 is almost completely housed in the second body 70 so that the support foot 10 has a minimum longitudinal extension. Only the end portion of the first body 20 from which the tabs 21 jut out, projects from the second body 70, beyond the opening 72. The box 100 is in an extended position relative to the first body 20, in which it projects beyond the free edge of the first body 20; such extended position is maintained by the spring 95. Furthermore, the stem 82 completely retracted into the cylinder 81, locks the bolt 83 in abutment against an upper end of the through opening 113. In this way, the box 100 is locked in the extended position to prevent it being pulled out from the first body 20 because of the weight force and the action of the spring 95. The extended position of the box 100 keeps the sectors 40 locked in the folded position thanks to the engagement of each niche 53 with the respective free edge of the arms 43.

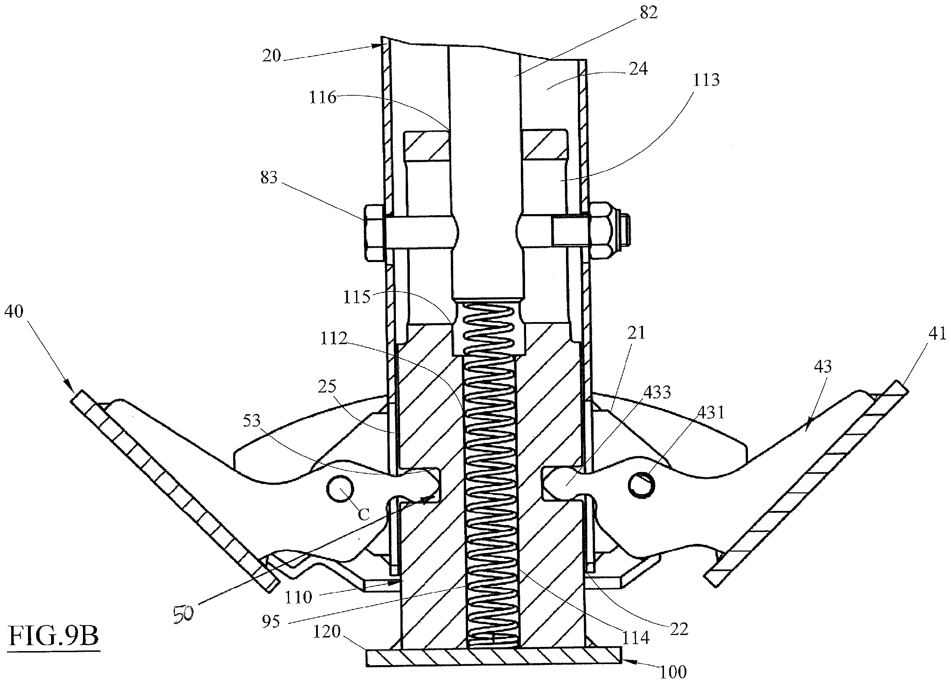

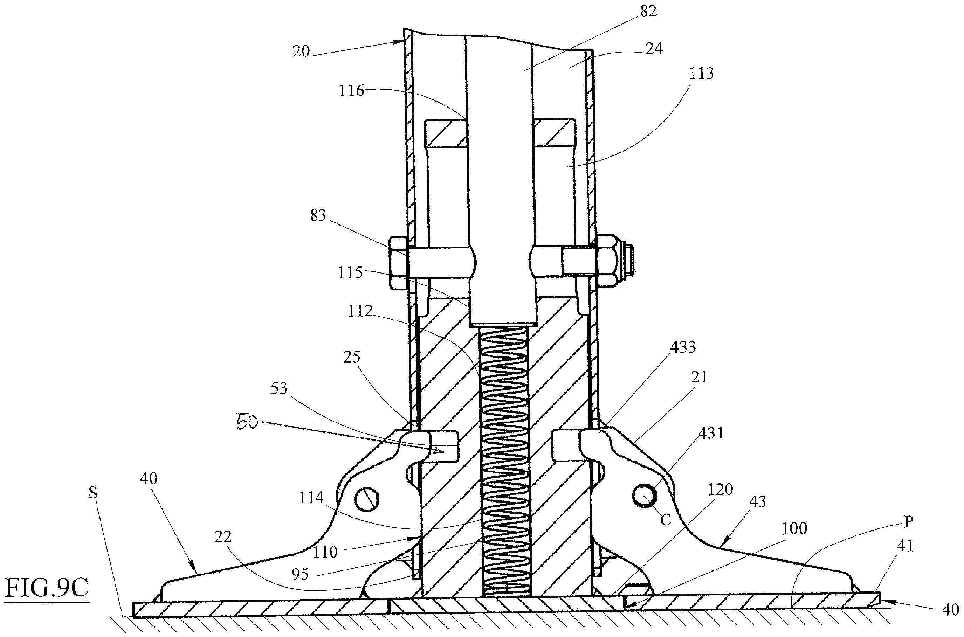

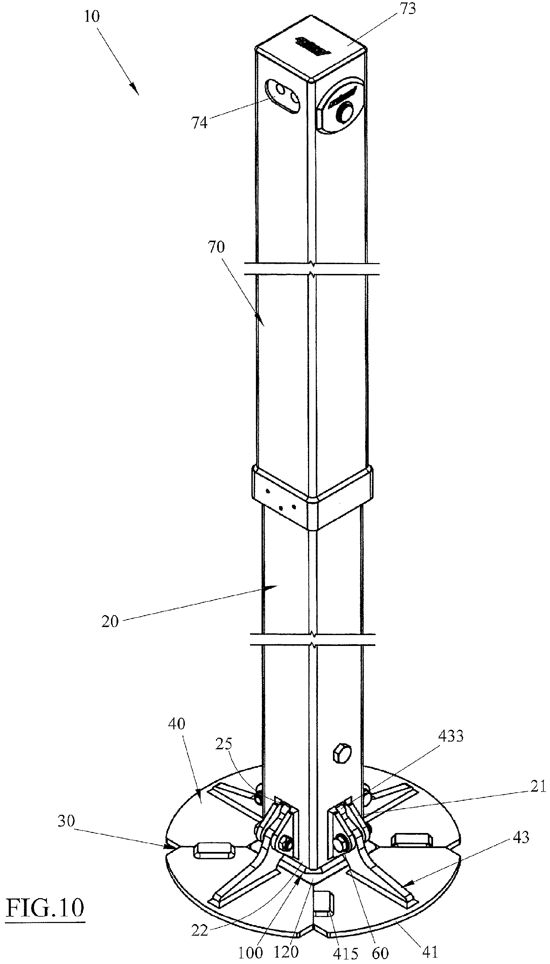

When the adjustment means 80 is actuated to pass to the support configuration (shown in Figures 9C and 10), the first body 20 slides relative to the second body 70, with the free end of the first body 20 that moves away from the opening 72 of the second body 70. At the same time, the base portion 120 of the box 100 enters into contact with the parking surface S.

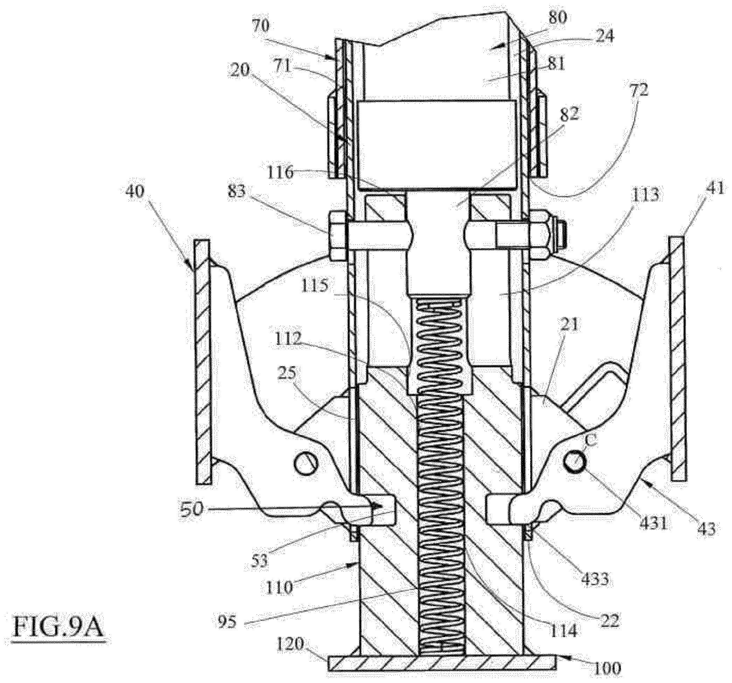

The box 100 slides (Figures 9A - 9C) relative to the first body 20 from the extended position (Figure 9A), in which the base portion 120 is distal from the free end 22 of the first body 20, to a retracted position (Figure 9C), in which the base portion 120 is proximal to the free end 22 of the first body 20. In particular, the sliding of the box 100 relative to the first body 20 compresses the spring 95 against the stem 82, until the free end of the stem 82 is received in the cavity defined by the second stretch 115 of the inner wall of the body 110 (Figure 9C). During the sliding of the box 100, the niches 53 - associated with the box 100 - translate longitudinally relative to the tabs 21 and to the pivot 60 - associated with the first body 20 - from a first position to a second position. This translation of the niches 53 imposes a force on the free edge 433 of each arm 43 - parallel to the longitudinal axis A and directed in the opposite direction to the plane P and to the parking surface S - which causes a rotation of the respective sector 40 from the folded position to the unfolded position.

Preferably, in the unfolded position (as can be seen in Figure 9C), an edge portion of each arm 43 - adjacent to the plate 41) is flush with, preferably in abutment against, a respective surface portion of the box 100 through the corresponding window 25 in the first body 20 so as to enable better distribution of the weight force acting on the support foot 10. In the embodiment considered, the base portion 120 of the box 100 lies on the plane P of distribution of the weight of the base 30, therefore defining the support surface of the base 30 together with the support surfaces 411 of the sectors 40.

When the adjustment means 80 is activated to bring the support foot 10 into the compact configuration, the stem 82 of the adjustment means is retracted hence distancing the free end of the first body 20 and the box 100 from the parking surface S. This distancing enables the spring 95 to extend. Therefore, the box 100 slides longitudinally in the opposite direction to the previous case i.e. from the retracted position to the extended position - under the thrust force of the spring 95 and of the respective weight. Accordingly, the niches 53 associated with the box 100 translate relative to the tabs 21 and to the pivot 60 associated with the first body from the second position to the first position. This movement of the niches 53 relative to the pivot 60, exerts a force on the free edge 433 of each arm 43 such as to impose a rotation about the axis of rotation C of the corresponding whole sector 40 from the unfolded position to the folded position.

As will be clear to a person skilled in the art, in the second embodiment, the sliding of the box 100 relative to the first body 20 from the extended position to the retracted position and vice versa - and the consequent rotation of the sectors 40 from the folded position to the unfolded position, and vice versa - just described, is substantially independent from the sliding of the first body 20 relative to the second body 70 from the retracted position to the extracted position, and vice versa, as the activation element 50 is independent from the second body 70.

The invention thus conceived can undergo numerous modifications and variants all of which are covered by the inventive concept.

For example, alternative embodiments (not shown) of the present invention comprise support feet with three or more extensions, i.e. provided with one or more additional extensions also slidably associated with at least one other extension of the support foot to form a telescopic structure analogous to those described above.

In alternative embodiments (not illustrated), the adjustment means comprises a female screw associated with the first body and a screw associated with the second body, both with a longitudinal axis parallel to the longitudinal axis, and can comprise an electric motor or a crank for placing in rotation the screw relative to the female screw (or vice versa).

In one embodiment (not illustrated), it is possible to provide a gasket (not illustrated) interposed between the cavity and the first body for further reducing the possibility of foreign bodies entering.

In alternative embodiments (not illustrated), both the first body and the second body may have a circular cross section or any other form adapted to the purpose. Likewise, the cavities of the first and second body can have a circular cross section or other shape adapted to house with reduced play the outer surface of the box or of the first body, respectively, with a cylindrical shape or another shape.

In practice, the materials used, as well as the contingent shapes and sizes, can be whatever according to the requirements without for this reason departing from the scope of protection of the following claims.

For example, the components of the support body according to the embodiments may be made of a material able to withstand a high weight force without being deformed, such as a metal or a suitable metal alloy, preferably steel.

## Claims

1. A support foot (10) comprising:
- a first body (20), which is tubular, provided with a first longitudinal axis (A), and
- a support base (30) associated in proximity to an end (21) of the first body (20),
said support base (30) comprising a plurality of sectors (40) rotatably associated with the first body (20), relative to a respective axis of rotation (C) orthogonal to the first longitudinal axis (A), between an unfolded position, in which a support face (411) of such sectors (40) lies on a plane (P) of distribution of the weight of the base (30) substantially orthogonal to the first longitudinal axis (A), and a folded position, in which each sector (40) is reclined on a portion of the first body (20) with the support face (411) thereof inclined relative to the plane (P),
wherein the support foot (10) comprises an activation element (50) adapted to interact with the sectors (40) for activating them in rotation about the respective axis of rotation (C) between the unfolded position and the folded position, **characterised by** the fact that each sector (40) is movable from the respective unfolded position to the respective folded position in contrast to a spring (90, 95), or that each sector (40) is movable from the respective folded position to the respective unfolded position in contrast to a spring (90, 95).

2. The support foot (10) according to claim 1, wherein the activation element (50) is movably associated relative to the first body (20) along the first longitudinal axis (A) of the first body (20) between a first axial position and a second axial position distinct from the first axial position.

3. The support foot (10) according to claim 1, wherein each sector (40) comprises an arm (43) jutting out in a substantially opposing direction to the support face (411) relative to the respective axis of rotation (C), said arm (43) being adapted to come into contact with the activation element (50) for the activation in rotation of the respective sector (40) about the respective axis of rotation (C) between the unfolded position and the folded position.

4. The support foot (10) according to claim 3, wherein the activation element comprises a plurality of projecting elements (51) each comprising an end shaped edge so as to define a pusher (511) that acts substantially like a tappet on a corresponding free edge (433) of the arm (43) of a respective sector (40).

5. The support foot (10) according to claim 3, wherein the activation element comprises a plurality of niches (53) which act substantially like a tappet on a corresponding free edge (433) of the arm (43) of a respective sector (40).

6. The support foot (10) according to claim 1, which comprises a second body (70), which is tubular, provided with a second longitudinal axis (A) slidably associated with the outside of the first body (20) along a longitudinal direction parallel to the first longitudinal axis (A) and to the second longitudinal axis (A), the first body (20) and the second body (70) being mutually movable between a retracted position and an extracted position and the base (30) being associated with the end of the first body (20) axially projecting from the second body (70).

7. The support foot (10) according to claim 3 and 6, wherein the activation element (50) is rigidly connected to the second body (70) and movable therewith along the longitudinal direction, the activation element (50), in the stroke of the second body (70) relative to the first body (20) from the extracted position to the retracted position, being configured to press on the arm (43) of each sector (40) for activating in rotation each sector (40) from the unfolded position to the folded position in contrast to the spring (90).

8. The support foot (10) according to claim 1, which comprises a box (100) provided with a third longitudinal axis (A) and slidably associated with the inside of the first body (20) along a longitudinal direction parallel to the first longitudinal axis (A), the first body (20) and the box (100) being mutually movable between a retracted position and an extracted position and the base (30) being associated with an end (21) of the first body (20) that surrounds at least an axial portion of the box (100).

9. The support foot (10) according to claim 3 and 8, wherein the activation element (50) is placed on the box (100) and movable therewith along the longitudinal direction, the activation element (50) being configured to house at least one portion of the arm (43) of each sector (40) for activating in rotation each sector (40) alternatively between the unfolded position and the folded position, respectively, during the stroke of the box (100) relative to the first body (20) between the retracted position and the extracted position.

10. The support foot (10) according to claim 6 or 7, comprising means (80) for adjusting the distance between the second body (70) and the base (30), said means (80) for adjusting comprising a linear actuator.

11. The support foot (10) according to claim 10, wherein the linear actuator comprises one among a pneumatic linear actuator, a hydraulic linear actuator, an oleodynamic linear actuator, and a female screw associated with the first body and a screw associated with the second body, both with a longitudinal axis parallel to the first longitudinal axis (A), and actuated by an electric motor or a crank for placing in rotation the screw relative to the female screw.

## Patentansprüche

1. Stützfuß (10), umfassend:
- einen ersten Körper (20), der rohrförmig ist, versehen mit einer ersten Längsachse (A), und
- eine Stützbasis (30), die in einer Nähe eines Endes (21) des ersten Körpers (20) assoziiert ist,
die Stützbasis (30) umfassend eine Vielzahl von Sektoren (40) aufweist, die drehbar mit dem ersten Körper (20) assoziiert sind, in Bezug auf eine jeweilige Drehachse (C), die orthogonal zu der ersten Längsachse (A) ist, zwischen einer ausgeklappten Position, in der eine Stützfläche (411) solcher Sektoren (40) auf einer Ebene (P) zur Verteilung des Gewichts der Basis (30) im Wesentlichen orthogonal zu der ersten Längsachse (A) liegt, und einer angeklappten Position, in der jeder Sektor (40) auf einen Abschnitt des ersten Körpers (20) angelehnt ist, wobei die Stützfläche (411) in Bezug auf die Ebene (P) geneigt ist,
wobei der Stützfuß (10) ein Aktivierungselement (50) aufweist, das angepasst ist, um mit den Sektoren (40) zusammenzuwirken, um sie um die jeweilige Drehachse (C) zwischen der ausgeklappten Position und der angeklappten Position in Drehung zu versetzen, durch den Umstand gekennzeichnet, dass jeder Sektor (40) im Gegensatz zu einer Feder (90, 95) von der jeweiligen ausgeklappten Position in die jeweilige angeklappte Position bewegbar ist, oder dass jeder Sektor (40) im Gegensatz zu einer Feder (90, 95) von der jeweiligen angeklappten Position in die jeweilige ausgeklappte Position bewegbar ist.

2. Stützfuß (10) nach Anspruch 1, wobei das Aktivierungselement (50) entlang der ersten Längsachse (A) des ersten Körpers (20) zwischen einer ersten axialen Position und einer zweiten axialen Position, die sich von der ersten axialen Position unterscheidet, bewegbar in Bezug auf den ersten Körper (20) assoziiert ist.

3. Stützfuß (10) nach Anspruch 1, wobei jeder Sektor (40) einen Arm (43) aufweist, der in einer im Wesentlichen entgegengesetzten Richtung zu der Stützfläche (411) in Bezug auf die jeweilige Drehachse (C) hervorsteht, wobei der Arm (43) angepasst ist, um für das Indrehungversetzen des jeweiligen Sektors (40) um die jeweilige Drehachse (C) zwischen der ausgeklappten Position und der angeklappten Position in Kontakt mit dem Aktivierungselement (50) zu kommen.

4. Stützfuß (10) nach Anspruch 3, wobei das Aktivierungselement eine Vielzahl von hervorstehenden Elementen (51) umfasst, die jeweils eine endförmige Kante aufweisen, um einen Schieber (511) zu definieren, der im Wesentlichen wie ein Stößel auf eine entsprechende freie Kante (433) des Arms (43) eines jeweiligen Sektors (40) wirkt.

5. Stützfuß (10) nach Anspruch 3, wobei das Aktivierungselement eine Vielzahl von Lücken (53) aufweist, die im Wesentlichen wie ein Stößel auf eine entsprechende freie Kante (433) des Arms (43) eines jeweiligen Sektors (40) wirken.

6. Stützfuß (10) nach Anspruch 1, der einen zweiten Körper (70) umfasst, der rohrförmig ist, versehen mit einer zweiten Längsachse (A), die verschiebbar mit der Außenseite des ersten Körpers (20) entlang einer Längsrichtung parallel zu der ersten Längsachse (A) und zu der zweiten Längsachse (A) assoziiert ist, wobei der erste Körper (20) und der zweite Körper (70) gegenseitig zwischen einer eingefahrenen Position und einer ausgefahrenen Position bewegbar sind und die Basis (30) mit dem Ende des ersten Körpers (20) assoziiert ist, das axial von dem zweiten Körper (70) hervorsteht.

7. Stützfuß (10) nach Anspruch 3 und 6, wobei das Aktivierungselement (50) starr mit dem zweiten Körper (70) verbunden und damit entlang der Längsrichtung bewegbar ist, wobei das Aktivierungselement (50) bei dem Hub des zweiten Körpers (70) in Bezug auf den ersten Körper (20) von der ausgefahrenen Position in die eingefahrene Position konfiguriert ist, um auf den Arm (43) von jedem Sektor (40) zu drücken, um jeden Sektor (40) im Gegensatz zu der Feder (90) von der ausgeklappten Position in die angeklappte Position in Drehung zu versetzen.

8. Stützfuß (10) nach Anspruch 1, der einen Kasten (100) umfasst, versehen mit einer dritten Längsachse (A) und verschiebbar assoziiert mit der Innenseite des ersten Körpers (20) entlang einer Längsrichtung parallel zu der ersten Längsachse (A), wobei der erste Körper (20) und der Kasten (100) gegenseitig zwischen einer eingefahrenen Position und einer ausgefahrenen Position bewegbar sind und die Basis (30) mit einem Ende (21) des ersten Körpers (20) assoziiert ist, das mindestens einen axialen Abschnitt des Kastens (100) umgibt.

9. Stützfuß (10) nach Anspruch 3 und 8, wobei das Aktivierungselement (50) auf dem Kasten (100) angeordnet und damit entlang der Längsrichtung bewegbar ist, wobei das Aktivierungselement (50) konfiguriert ist, um mindestens einen Abschnitt des Arms (43) von jedem Sektor (40) aufzunehmen, um jeden Sektor (40) bei dem Hub des Kastens (100) in Bezug auf den ersten Körper (20) zwischen der eingefahrenen Position und der ausgefahrenen Position abwechselnd zwischen der ausgeklappten Position und der angeklappten Position in Drehung zu versetzen.

10. Stützfuß (10) nach Anspruch 6 oder 7, umfassend eine Einrichtung (80) zum Einstellen des Abstands zwischen dem zweiten Körper (70) und der Basis (30), die Einrichtung (80) zum Einstellen umfassend einen linearen Stellantrieb.

11. Stützfuß (10) nach Anspruch 10, wobei der lineare Stellantrieb einen unter einem pneumatischen linearen Stellantrieb, einem hydraulischen linearen Stellantrieb, einem öldynamischen linearen Stellantrieb und einer mit dem ersten Körper assoziierten Hohlschraube und einer mit dem zweiten Körper assoziierten Schraube umfasst, die beide eine Längsachse parallel zu der ersten Längsachse (A) aufweisen und durch einen Elektromotor oder eine Kurbel betätigt werden, um die Schraube in Bezug auf die Hohlschraube in Drehung zu versetzen.

## Revendications

1. Béquille (10) comprenant:
- un premier corps (20), qui est tubulaire, pourvu d'un premier axe longitudinal (A) et,
- une base de soutien (30) associée en proximité à une extrémité (21) du premier corps (20), ladite base de soutien (30) comprenant une pluralité de secteurs (40) associés de manière rotative au premier corps (20), par rapport à un axe de rotation (C) respectif orthogonal au premier axe longitudinal (A), entre une position dépliée, dans laquelle une face d'appui (411) de ces secteurs (40) se trouve sur un plan (P) de répartition du poids de la base (30) sensiblement orthogonal au premier axe longitudinal (A), et une position pliée, dans laquelle chaque secteur (40) est incliné sur une partie du premier corps (20) avec sa face d'appui (411) inclinée par rapport au plan (P),
dans laquelle la béquille (10) comprend un élément d'activation (50) adapté pour interagir avec les secteurs (40) afin de les activer en rotation autour de l'axe de rotation (C) respectif entre la position dépliée et la position pliée,
**caractérisé en ce que** chaque secteur (40) est mobile de la position dépliée respective à la position pliée respective contrairement à un ressort (90, 95), ou que chaque secteur (40) est mobile depuis la position pliée respective à la position dépliée respective contrairement à un ressort (90, 95).

2. Béquille (10) selon la revendication 1, dans laquelle l'élément d'activation (50) est associé de manière mobile par rapport au premier corps (20) le long du premier axe longitudinal (A) du premier corps (20), entre une première position axiale et une deuxième position axiale distincte de la première position axiale.

3. Béquille (10) selon la revendication 1, dans laquelle chaque secteur (40) comprend un bras (43) en saillie dans une direction sensiblement opposée à la face d'appui (411) par rapport à l'axe de rotation (C) respectif, ledit bras (43) étant adapté pour venir en contact avec l'élément d'activation (50) pour l'activation en rotation du secteur (40) respectif autour de l'axe de rotation (C) respectif entre la position dépliée et la position pliée.

4. Béquille (10) selon la revendication 3, dans laquelle l'élément d'activation comprend une pluralité d'éléments en saillie (51) comprenant chacun un bord en forme d'extrémité de manière à définir un poussoir (511) qui agit sensiblement comme une tige de culbuteur sur un bord libre correspondant (433) du bras (43) d'un secteur respectif (40).

5. Béquille (10) selon la revendication 3, dans laquelle l'élément d'activation comprend une pluralité de niches (53) qui agissent sensiblement comme une tige de culbuteur sur un bord libre correspondant (433) du bras (43) d'un secteur respectif (40).

6. Béquille (10) selon la revendication 1, comprenant un deuxième corps (70), tubulaire, pourvu d'un deuxième axe longitudinal (A) associé de manière coulissante à l'extérieur du premier corps (20) le long d'une direction longitudinale parallèle au premier axe longitudinal (A) et au deuxième axe longitudinal (A), le premier corps (20) et le deuxième corps (70) étant mutuellement mobiles entre une position rétractée et une position extraite et la base (30) étant associée à l'extrémité du premier corps (20) en saillie axiale à partir du deuxième corps (70).

7. Béquille (10) selon les revendications 3 et 6, dans laquelle l'élément d'activation (50) est relié rigidement au deuxième corps (70) et mobile avec celui-ci le long de la direction longitudinale, l'élément d'activation (50), lors de la course du deuxième corps (70), par rapport au premier corps (20) de la position extraite à la position rétractée, étant configuré pour appuyer sur le bras (43) de chaque secteur (40) afin d'activer en rotation chaque secteur (40) de la position dépliée à la position pliée contrairement au ressort (90).

8. Béquille (10) selon la revendication 1, comprenant une boîte (100) munie d'un troisième axe longitudinal (A) et associée de manière coulissante à l'intérieur du premier corps (20) le long d'une direction longitudinale parallèle au premier axe longitudinal (A), le premier corps (20) et la boîte (100) étant mutuellement mobiles entre une position rétractée et une position extraite, et la base (30) étant associée à une extrémité (21) du premier corps (20) qui entoure au moins une partie axiale de la boîte (100).

9. Béquille (10) selon les revendications 3 et 8, dans laquelle l'élément d'activation (50) est placé sur la boîte (100) et se déplace avec celle-ci le long de la direction longitudinale, l'élément d'activation (50) étant configuré pour loger au moins une partie du bras (43) de chaque secteur (40) afin d'activer en rotation chaque secteur (40) alternativement entre la position dépliée et la position pliée, respectivement, pendant la course de la boîte (100) par rapport au premier corps (20) entre la position rétractée et la position extraite.

10. Béquille (10) selon les revendications 6 ou 7, comprenant des moyens (80) de réglage de la distance entre le deuxième corps (70) et la base (30), lesdits moyens (80) de réglage comprenant un actionneur linéaire.

11. Béquille (10) selon la revendication 10, dans laquelle l'actionneur linéaire comprend un parmi un actionneur linéaire pneumatique, un actionneur linéaire hydraulique, un actionneur linéaire oléodynamique, et une vis femelle associée au premier corps et une vis associée au deuxième corps, toutes deux avec un axe longitudinal parallèle au premier axe longitudinal (A), et actionnées par un moteur électrique ou une manivelle pour mettre en rotation la vis par rapport à la vis femelle.
